(19) Europäisches Patentamt
European Patent Office
Office européen des brevets

(11) **EP 4 760 342 A1**

(12) **EUROPEAN PATENT APPLICATION**

(43) Date of publication:
**17.06.2026 Bulletin 2026/25**

(21) Application number: **24218659.1**

(22) Date of filing: **10.12.2024**

(51) International Patent Classification (IPC):
**G01S 7/4911** (2020.01)     **G01J 9/00** (2006.01)
**G01J 9/04** (2006.01)     **G01S 17/34** (2020.01)
**G01J 3/32** (2006.01)

(52) Cooperative Patent Classification (CPC):
**G01S 7/4911; G01J 3/32; G01J 9/00; G01J 9/04;
G01S 17/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventors:
• **ZHANG, Xuebing
  5614 GA Eindhoven (NL)**
• **PÉREZ SANTACRUZ, Javier
  5022 CE Tilburg (NL)**
• **OLDENBEUVING, Ruud
  5506 EM Veldhoven (NL)**

(74) Representative: **AWA Sweden AB
Matrosgatan 1
Box 5117
200 71 Malmö (SE)**

(54) **SYSTEM AND METHOD FOR MEASURING INSTANTANEOUS FREQUENCY OF A LIGHT SIGNAL**

(57)     According to an aspect of the present inventive concept there is provided a system (100) for measuring frequency of a light signal (112) from a chirped laser source (110), said system (100) comprising: an optical measurement unit (120) configured to receive at least a portion (114) of the light signal (112), and to output, via an optical hybrid coupler (122), at least two angle diversity signals (124) based on a difference between a first and second signal (114a, 114b) formed by splitting the at least portion (114) of the light signal (112), wherein the second signal (114b) is delayed relative to the first signal (114a), and wherein a pair of signals of the at least two angle diversity signals (124) have a fixed phase shift relative to each other; and a control unit (130) configured to: receive the at least two angle diversity signals (124), generate a complex signal, based on the at least two angle diversity signals (124), and determine an instantaneous phase of the complex signal for determining an instantaneous frequency of the light signal (112).

Figure 1

**Description**

Technical field

The present inventive concept relates to the field of optical signal processing, and more specifically, to real-time instantaneous frequency measurements of optical signals.

Background

Fast linear frequency modulated continuous-wave (FMCW) lasers are essential in various applications, including absolute distance, speed, and vibration measurements, light detection and ranging (LIDAR), and optical coherence tomography (OCT). These and other applications depend on precise laser frequency measurements for proper functioning. However, accurately measuring instantaneous frequencies presents significant challenges due to a lack of suitable methods for fast and precise frequency tracking.

In the prior art, structures employed to estimate laser frequencies involve the use of a delayed self-heterodyne interferometer and Hilbert transforms. However, the use of Hilbert transforms comes with limitations, such as ambiguity in distinguishing between positive and negative chirps and reduced accuracy with low-frequency beats. Additionally, methods based on Hilbert transforms require long delay lines of the, typically necessitating the use of one to several meters of fiber.

Hence, there is a need for an improved systems and methods for accurately and efficiently measuring the instantaneous frequency of lasers.

Summary

An objective of the present inventive concept is to provide a method and system for enabling accurate and efficient measurements of instantaneous frequency of chirped laser sources.

Another objective of the present inventive concept is to enable on-chip integration of a system for measuring instantaneous frequency of a chirped laser source.

Yet another objective is to enhance the precision and reliability of instantaneous frequency estimation in various applications, including but not limited to absolute distance measurements, speed and vibration measurements, LIDAR, and optical coherence tomography (OCT).

A further objective is to enable determination of instantaneous frequencies during a frequency chirp of a chirped laser source.

Yet another objective is to enable determination of a compensation signal to improve a linearity of a light signal.

Additionally, an objective is to enable a small-sized and integrated laser linear chirp enabler with low digital signal processing (DSP) complexity.

These and other objectives are at least partly met by the invention as defined in the independent claims. Preferred embodiments are set out in the dependent claims.

According to a first aspect of the present inventive concept there is provided a system for measuring frequency of a light signal from a chirped laser source, said system comprising:

an optical measurement unit configured to receive at least a portion of the light signal, and to output, via an optical hybrid coupler, at least two angle diversity signals based on a difference between a first and second signal formed by splitting the at least portion of the light signal, wherein the second signal is delayed relative to the first signal, and wherein a pair of signals of the at least two angle diversity signals have a fixed phase shift relative to each other; and a control unit configured to:

receive the at least two angle diversity signals,
generate a complex signal, based on the at least two angle diversity signals, and
determine an instantaneous phase of the complex signal for determining an instantaneous frequency of the light signal.

Hereby, there is enabled a system for real-time instantaneous frequency estimation of optical signals. In particular, the system surpasses any needs for approaches based on Hilbert transforms and enables improved accuracy in determination of instantaneous frequency of the chirped laser source.

In certain applications, determination of a relative instantaneous frequency with respect to a reference may be desired. However, some applications may require determination of the absolute frequency. In such cases, a calibration may be performed. The calibration may involve comparing the determined instantaneous frequency to a known standard or reference, ensuring that the absolute frequency is accurately determined.

The calibration may convert relative frequency measurements into absolute frequency values. By comparing the relative instantaneous frequency to a known reference frequency module, absolute frequency can be determined.

In other words, the calibration may map relative frequency measurements to absolute frequencies (e.g., by a linear mapping).

In an example, the linear mapping may be represented by *y=Kx+B,* where *y* represents absolute frequency, *x* represents relative frequency, K represents the frequency changing slope, and *B* denotes an offset.

To perform the calibration, the absolute frequency of at least two measured samples may be determined. Once these samples are known, the linear mapping function can be calculated. The frequency changing slope (K) may be a fixed and known value, e.g., determined by physical properties of the system, such as the length of the delay line. For example, *K* may be specified as 50 GHz per $\pi$ phase shift.

However, a measured frequency curve may exhibit an offset (B) that varies between different measurements. This offset may arise due to the phase calculation being constrained within a $2\pi$ range, leading to ambiguity in identifying the exact $2\pi$ range to which the reference sample (or a first sample of the at least two measured samples) belongs. Consequently, a calibration may be performed for each measurement of instantaneous frequency to accurately determine the instantaneous absolute frequency.

In a sense, the calibration recalibrates the offset (8) for each measurement, ensuring precise and reliable instantaneous frequency measurements.

The system may utilize an angle-diversity optical delayed self-heterodyne structure for direct complex-domain DSP. Thus, the system effectively mitigates or reduces ambiguity associated with positive and negative chirps, as well as errors related to low-beat-frequency signals.

The DSP complexity is, e.g., reduced by phase accumulation, provided by splitting the portion of the light signal such that the second signal is delayed relative to the first signal. Particularly, the usage of angle diversity signals, and detection and processing thereof by the control unit, enables evading complex DSP architectures. Hence, lower DSP complexity is enabled by avoiding complex approaches based on Hilbert transforms in a frequency domain.

In general, the system comprises an optical measurement unit that is configured to output at least two angle diversity signals. The optical measurement unit determines the angle diversity signals based on a portion of the light signal and a delayed version of the portion of the light signal. This implies that the angle diversity signals may represent a beat signal formed by interference of the first and second signals.

Thanks to measurement of the angle diversity signals, simple processing may be performed for measuring instantaneous frequency of the light signal. The angle diversity signals may be processed to easily determine a frequency or phase of the beat signal. This enables estimating instantaneous frequency with high accuracy even for chirped laser sources with fast frequency chirp. The system may be configured to determine real-time instantaneous frequency of a fast chirped laser. In particular, the system enables improved accuracy of measurements or estimations of instantaneous frequencies of fast chirped laser sources, e.g., in comparison to traditional approaches.

Thanks to the high accuracy in determining the frequency/phase of the beat signal, a short delay of the second signal may be used. The delay of the second signal may be provided by physically guiding the second signal along an optical path. Thanks to the system allowing a short delay to be used, the system may also be compact.

Further, as discussed herein, the architecture of the control unit of the system provides reduced algorithm complexity, thereby shortening potential DSP-caused delays.

In general, the system enables ultra-fast, low-cost, and accurate instantaneous frequency measurements or estimations of optical signals.

The system may be a referred to as direct complex-domain Optical Phase Finite Difference (OPFD) system. In particular, the system may be a direct complex-domain OPFD system for efficient and instantaneous measurements of laser frequencies.

The system may operate in a time domain, offering a comprehensive and versatile model. Further, the system is not constrained to rely on frequency analysis that assumes a constant frequency during a single measurement period. Hence, the system is not limited in its ability to manage scenarios where the frequency varies over time.

Moreover, the system supports both fast and large-range laser frequency drifts, providing robust performance across a wide spectrum of operational conditions. In other words, the system enables precise and reliable frequency estimation even under conditions of rapid frequency changes and broad frequency ranges.

The chirped laser source may be any suitable type of laser, including but not limited to external cavity lasers (ECL) and distributed feedback lasers (DFB). The system is designed to handle light signals from lasers with continuous frequency shifting, whether fast or slow. The frequency changes can take various forms, such as linear, triangular, or pulse-shaped modulations, etc.

In an example, some or all steps of the control unit may be replaced or assisted by one or more neural networks. In other words, a neural network may be trained on performing said steps. Hence, the control unit of the system may be configured to: receive at least two angle diversity signals and determine an instantaneous frequency of the light signal.

Hence, improved performance and efficiency may be provided. Neural networks may enable accurate and faster processing compared to conventional systems and methods. The integration of a neural network further reduces the computational complexity and enhances the system's ability to adapt to varying input conditions. Additionally, the neural network may improve robustness and reliability of the system, e.g., making the system more effective in real-time applications.

In this disclosure the term "light" should be allowed a broad interpretation, not limited to visible electromagnetic radiation. Rather, the term "light" may also include for example ultra-violet light and infra-red light.

By the term "laser source" is herein meant any unit, device, and/or element that can emit at least partially coherent light. The chirped laser source may comprise a laser diode, e.g., configured to generate an optical carrier signal. The optical carrier signal is generated in the form of laser light (i.e., the light signal).

In this context, a "chirped laser source" refers to a laser source whose frequency changes rapidly over time (i.e., the frequency changes at a high rate). Several types of lasers can be chirped, which means their frequency can vary quickly. Hence, the present incentive concept enables measurement of the instantaneous frequency of a chirped or frequency-fast-changing laser source.

Traditional methods for frequency measurements are typically only effective for lasers with very slowly changing frequencies. These conventional approaches lack the theoretical foundation to support instantaneous optical frequency measurements for rapidly changing frequencies.

The optical measurement unit may comprise an interferometer structure configured to split the at least portion of the light signal into the first signal and the second signal, and to delay the second signal relative to the first signal.

In other words, the interferometer structure may be configured to divide a portion of the light signal into two separate signals. One of these signals is delayed in comparison to the other.

The interferometer structure may, for example, be a Mach-Zehnder Interferometer (MZI) or a self-heterodyne interferometer. The MZI configuration may allow for precise phase difference measurements by splitting the portion light into two paths, introducing a controlled phase shift, and then recombining the light signals to produce an interference pattern. The interferometer structure may, e.g., be an asymmetric MZI.

A self-heterodyne interferometer splits the portion of light into two light parts, with one part undergoing a frequency shift and a time delay before recombination with the other part. A self-heterodyne interferometer may particularly facilitate measuring of linewidth of the laser, providing high accuracy for analysis of beat frequency generated by the interference of the delayed and frequency-shifted signals.

Hence, by creating a controlled delay between the first and second signal, accurate measurements can be provided. Additionally, the use of an asymmetric MZI may enable reduction in noise and increased clarity of measurements.

Finite difference techniques may be used for estimating the instantaneous frequency of the light signal. Such a technique benefits from smaller delays between the first and second signals, which lead to higher accuracy as a finite difference approximation closely corresponds to a derivative (instantaneous frequency) of the light signal. The delay can be adjusted based on the rate of laser frequency changes. However, for slower frequency changes, extremely small delays (e.g., nanoseconds to microseconds) are not necessary to maintain good accuracy.

For high-speed applications, such as frequency modulation in data communication systems (e.g., 50GBaud/s On-Off Keying), the delay may be less than 20 picoseconds (e.g., around 10 picoseconds).

Smaller delays may result in a more precise instantaneous frequency estimations, but they may also reduce the signal-to-noise ratio (SNR). Therefore, selecting an appropriate delay may balance accuracy and performance, ensuring optimal results for various applications. Hence, the delay caused by the interferometer structure may be configured differently depending on whether the light signal from the chirped laser source involves slow or rapid frequency changes.

In an example, the second signal may be configured to be delayed relative to the first signal with a relatively short delay. The second signal may be delayed relative to the first signal by a delay line having a length within a range between 1 cm and 150 cm, preferably between 5 cm and 50 cm, more preferably between 10 cm and 20 cm. Hence, a relatively short length of the delay line may be used.

For example, a path length difference of 10 cm for the first and second signal may enable accurate measurements. A 25 cm path length difference may provide almost the same accuracy as a 200 cm difference.

For on-chip designs, path length differences of less than 25 cm may be considered to maintain compactness and integration efficiency. A compact form factor is thus enabled, e.g., with a delay line length in the range of tens of centimeters.

A 10 cm path length difference may correspond to a time delay of approximately 0.3 nanoseconds in free space (or 0.5 nanoseconds in a fiber), while a 25 cm difference may result in a time delay of about 0.8 nanoseconds in free space (or 1.2 nanoseconds in a fiber).

It is further appreciated that the system may utilize a relatively long delay line in the interferometer structure. By employing a longer delay line, the system can accommodate applications where extended delays are beneficial or necessary.

Generally, the optical measurement unit may be configured to split the portion of the light signal into the first light signal propagating in a first path and the second light signal propagating in a second path. The second path may have a preset delay in relation to the first path. By way of example, the preset delay may be provided by the first path and the second path having different optical path lengths. The preset delay may, for example, be a known preset delay. The preset delay may be provided by one of the first and the second paths being longer that the other path. A longer path may be achieved by guiding the first or second light signal in a loop, a spiral or the like, so that a long path length may be provided in a compact solution.

After having passed the first and the second paths respectively, the first and the second light signals are combined again. When the first and second light signals are combined, interference between the light signals may occur. The resulting combined signal may form a beat frequency. The beat frequency is linked to the preset delay of the optical measurement unit. By way of example, the beat frequency may be proportional to the preset delay.

The optical measurement unit may further comprise the optical hybrid coupler. The optical hybrid coupler may hence be configured to output the at least two angle diversity signals based on an interference between the first signal and the second signal.

The optical hybrid coupler may, e.g., be a 120-degree optical hybrid coupler or a 90-degree optical hybrid coupler.

A 120-degree optical hybrid coupler is a device that splits an input optical signal into three output signals (i.e., three angle diversity signals) with a fixed phase difference of 120 degrees between each pair of outputs. The 120-degree phase shift ensures that the signals are evenly spaced in phase.

A 90-degree optical hybrid coupler, also known as a quadrature coupler, splits an input signal into two output signals (i.e., two angle diversity signals) with a 90-degree phase difference between them.

Further, the optical measurement unit may comprise at least two photodiodes for detecting the at least two angle diversity signals.

The photodiodes may generally be any unit or device comprising a light sensitive element configured to detect light intensity impinging onto the light sensitive element, to produce an electrical signal in response thereof, and to allow read-out of the electrical signal. The photodiodes may, e.g., be photodetectors.

The photodiodes may be single ended and/or balanced photodiodes (BPDs). By a balanced photodiode is here meant a device comprising two photodiodes connected in series. When the two photodiodes detect the same level of light, i.e., when their generated electric signals are equal, their electric signals cancel each other out. By such arrangement, detection of small differences in light level on the two photodiodes may be provided.

Single-ended photodiodes detect the intensity of the angle diversity signals directly from the output of the optical hybrid coupler. In contrast, a balanced photodiode measures a difference in intensity between two outputted angle diversity signals (i.e., a pair of outputs), which may help to cancel out common-mode noise and improve the signal-to-noise ratio.

In general, the optical measurement unit may comprise three components: an optical MZI with short arm length difference (such as 20 cm or tens of centimeters, e.g., to support an on-chip structure), an optical hybrid coupler, and optical detection (e.g., single-ended photodiodes or a BPD).

In terms of the optical hybrid coupler and detection of the angle diversity signals, a design based on a 120-degree hybrid coupler may comprise (but not limited to) a 3x3 MMI followed by three single-ended photodiodes. Alternatively, a 90-degree hybrid coupler may be used, e.g., by implementing a 2x4 or 4x4 MMI followed by two BPDs. Generally, the optical hybrid coupler may comprise at least one MMI.

By incorporating at least one MMI or directional coupler in the optical hybrid coupler, precise control over the splitting and combining of light signals is provided. Additionally, the use of such couplers may enable a compact and integratable design (e.g., suitable for on-chip integration), i.e., reducing size and complexity of the optical measurement unit.

However, it is appreciated that alternative configurations, such as directional couplers or coupler-based systems, may be utilized. For instance, a 3x3 coupler may be utilized to facilitate desired light signal interference or combining.

The 90-degree hybrid coupler structure may reduce phase noise by using balanced detection. On the other hand, the approach based on the 120-degree hybrid coupler may have a less complex MMI structure, less fabrication errors, and/or a smaller footprint. The 120-degree optical hybrid coupler design may use single-ended photodiodes (as compared to BPDs), hence, e.g., reducing number of components required. The reduction of components also means fewer radio frequency connections are needed.

Additionally, the use of single-ended photodiodes may allow for simpler transimpedance amplifier (TIA) structures. Single-ended photodiodes generate a current that is directly proportional to the incident light, which can be converted to a voltage using a single TIA. This conversion process thus requires fewer components and connections compared to BPD configurations, which involve differential signals.

The system may be integrated onto a single semiconductor chip, or the system may be fiber-based.

The system allows for short delay lines, enabling more compact on-chip integration. Structures or components of the system may be size reduced to fit photonic integration, e.g., including delay line, photodiodes, and/or other components.

The system hence enables a compact (e.g., on-chip integratable) solution for frequency measurements, with reduced DSP complexity. The estimation of frequency of the light signal, may, e.g., be realized using a small size architecture that can be integrated onto a photonic integrated circuit (PIC). It is appreciated that some or all the components of the system may be integrated on a PIC.

In addition, the system enables adaptive frequency measurements which may be performed in real-time, enabling real-time instantaneous frequency measurement of the light signal. Especially, the adaptive measurements can handle non-linearities in frequency chirp, e.g., changing due to varying (external) conditions.

Hence, there is enabled a compact, adaptive, and integrated system for frequency measurements.

However, it is appreciated the system may be fiber-based. Some components of the system may be implemented using fiber optics, e.g., as an alternative to on-chip integration. In an example, certain components may be integrated on-chip (e.g., to leverage the benefits of miniaturization and high-speed processing), while other components may be fiber-based (e.g., to facilitate long-distance signal transmission and reduce electromagnetic interference).

Fiber-based may refer to a system configuration that utilizes optical fibers for signal transmission. This includes, but is not limited to, systems where optical fibers are used as the primary medium for transmitting light or other signals.

The system may further comprise an Analog-to-Digital Converter, ADC, wherein the ADC may be configured to convert an analog input signal to the control unit, based on the at least two angle diversity signals, into a digital signal.

Hence, the complex signal may be generated based on the digital signal. Thus, there is enabled complex-domain phase calculation, as compared to real-domain. The use of complex signals may enable real-time and positive/negative chirp measurements. In a sense, phase information acquired from the phase calculation of the (extracted) beat signal, is the estimated instantaneous frequency of the light signal. Further, the use of complex signals enables smaller time delays without sacrificing accuracy in estimation performance (e.g., at chirp edges between up- and down-ramps and vice versa).

The at least two angle diversity signals may be analog signals. The at least two angle diversity signals may hence be converted to digital signals by the ADC. In other words, the ADC may be configured to convert the detected signal, from an analog detected signal to a digital detected signal, and to send the digital detected signal to the control unit.

Further, the system may comprise a TIA configured to amplify the detected signals (e.g., one TIA per detected signal). Hence, amplified signals may be sent to the ADC.

ADCs may be associated with at least two photodiodes, e.g., configured to detect the at least two angle diversity signals. For example, each diversity signal may be converted into a digital signal by a respective ADC. Amplitudes of the detected angle diversity signals may be changed after detection. For example, different photodiodes may have different responses, hence the amplitudes may be determined and/or adjusted to make sure all angle diversity signals have the same, or a similar, amplitude.

The digital (i.e., converted) angle diversity signals may then be sampled by the control unit. In turn, the control unit may convert the digital signals into the complex domain.

In other words, a complex signal may be synthesized using a plurality of real (digital) signals, e.g., at least two real signals. The complex signal may for example be represented by a sum of the digital angle diversity signals in the complex domain. In an example, the complex signal may be represented as a vector in a complex space.

Based on the complex signal, the phase of the beat signal can be extracted. For example, a real-time tracked chirp over time can be captured.

Then, as the phase information of the beat signal extracted corresponds to an estimate of the instantaneous frequency, the instantaneous frequency is obtained (e.g., after a calibration).

The estimated instantaneous phase, i.e., frequency, may be outputted (e.g., via a Digital-to-Analog Converter, DAC) from the control unit. Hence, an output signal may indicate the instantaneous frequency of the light signal.

The complex signal may be represented in a digital domain based on a sum of the at least two angle diversity signals when each angle diversity signal is assigned a matched phase term.

In other words, a digital representation of each angle diversity signal may be assigned or given a matched phase shift term. The matched phase terms may relate to a corresponding phase shift of the respective angle diversity signals. In an example, for a 120-degree optical hybrid coupler, the matched phase shift terms may correspond to 0 degrees, 120 degrees, 240 degrees. On the other hand, for a 90-degree optical hybrid coupler, the matched phase shift terms may, e.g., correspond to 0 degrees and 90 degrees.

Further, the complex signal may be represented in a complex domain by a sum of the angle diversity signals when each angle diversity signal is assigned a respective matched complex phase term. Thus, for a 120-degree case, a second angle diversity signal may be shifted 120 degrees ($j2\pi/3$) in the complex domain relative to a first angle diversity signal, and a third angle diversity signal may be shifted a further 120 degrees ($j4\pi/3$) in the complex domain relative to the second angle diversity signal, where j is the complex number.

Similarly, for the 90-degree case, a second angle diversity signal may be shifted 90 degrees ($j\pi/2$) in the complex domain relative to the first angle diversity signal.

The instantaneous phase of the complex signal may be determined based on sample-by-sample calculations.

Sample-by-sample processing allows input samples to be processed individually and immediately, resulting in minimal latency, and enabling real-time performance. Thus, enabling immediate feedback and enhanced responsiveness, as it eliminates delays associated with accumulating and processing large frames of data.

In case the beat phase is extracted sample-by-sample, the laser instantaneous frequency is estimated sample-by-sample. In particular, real-time chirp tracking may involve chirp calculation on a sample-by-sample basis, such that instantaneous phase of the beat signal may be determined in real-time.

The sample-by-sample calculations (i.e., not frame-by-frame) enables real-time applications. For example, the sample-by-sample instantaneous frequency tracking may support real-time applications such as ultra-broadband and highly accurate laser wavelength lockers (WLLs), digital fast feedback control loops (e.g., Optical-electrical phase lock loop, OPLL), and/or optical spectrum analysis-based optical sensing (e.g., fast gas sensing).

With 'sample' may here be meant data collected at specific intervals, as compared to 'frames' which may relate to one or more chirps. A number of samples within a frame may relate to a frequency at which a time-domain waveform is sampled to derive the chirp (the rate of sampling may be well above the Nyquist limit). Typically, a chirp may be considered as a frame, e.g., with one up-chirp representing one frame and one down-chirp representing another.

Thus, calculations of a sample-by-sample basis may involve sequentially processing of samples, as compared to a frame-by-frame basis, where a complete set of samples (i.e., a frame) would be processed together.

The number of samples in a frame may depend on the sampling rate. For instance, in FMCW LIDAR applications, the chirp speed may range from 3 to Nx10GHz within 50 microseconds, where N may be an integer representing the multiple of 10 GHz. In high-speed datacom applications, the chirp speed may range from 1 to Nx100GHz within 50 to 100 picoseconds.

Further, in comparison, frame-by-frame processing requires collection and processing of many samples, often in large batches (e.g., 100,000 samples). This introduces significant delays, as the system must wait for the entire frame to be collected before processing can begin. Consequently, frame-by-frame processing is less suitable for applications where low latency and real-time responsiveness are desired.

The determined instantaneous phase of the complex signal may be adjusted based on phase unwrapping calculations to account for instantaneous phase values exceeding $2\pi$. In particular, $2\pi$-phase ambiguity may be avoided by utilizing a phase unwrapping algorithm.

In other words, the phase may be unwrapped using a method that involves adding or subtracting multiples of $2\pi$ to eliminate discontinuities and maintain a smooth transition between successive phase values. Such an unwrapping process may convert phase that initially fall outside a standard range of $-\pi$ to $\pi$ into a continuous sequence.

The at least portion of the light signal, represented by $E(t)$, is split into the first signal, represented by $E_1(t)$, and the second signal, represented by $E_2(t)$. The second signal $E_2(t)$ may be configured to travel through a delay line for delaying the second signal, $E_2(t-\tau)$, with a time delay $\tau$, relative to the first signal $E_1(t)$. The first and second signals with different time delays, $E_1(t)$, $E_2(t-\tau)$, may be configured to be split and merged into the at least two angle diversity signals via the optical hybrid coupler. Each angle diversity signal may further be configured to be detected by a respective photodiode. A phase of a first detected angle diversity signal may correspond to a phase finite difference, with delay $\tau$, of the light signal. The phase finite difference may be used to estimate the instantaneous frequency of the light signal.

It is appreciated that when the time delay $\tau$ is small, the phase finite difference represents the laser instantaneous frequency.

Extracting the phase from a real signal may usually require intricate Hilbert Transforms. However, in contrary, the phase can by the system herein be extracted by using angle-diversity signals of (e.g., $I_1$, $I_2$, and $I_3$), which may represent a same signal except with a fixed phase difference between themselves (e.g., 120 degrees).

A first angle diversity signal, $I_1$, may represent the real signal, which may be converted into a complex domain by giving each angle diversity signal a matched phase term (e.g., 0 degrees for $I_1$, $2\pi/3$ for $I_2$, and $4\pi/3$ for $I_3$) thereby forming new-generated angle diversity signals, and consequently summing all new-generated angle diversity signals. The created complex signal may hence represent a complex expression of the real signal (e.g., corresponding to the first angle diversity signal $I_1$). Then, the corresponding phase can be extracted in a sample-by-sample manner.

According to a second aspect of the present inventive concept a laser system comprising a chirped laser source and a system according to the first aspect, wherein the control unit is configured to determine, based on a plurality of determined instantaneous frequencies during a chirp of the chirped laser source, a compensation signal to improve a linearity of the light signal.

Hence, the chirped laser source may be a tunable chirped laser source.

This aspect may generally present the same or corresponding advantages as the former aspect.

The compensation signal may be configured to adjust a frequency and/or a non-linearity of a frequency chirp of the light signal of the chirped laser source. The compensation signal may particularly be configured to improve the linearity of the frequency chirp.

The laser system hereby has reduced optical loss and minimized impact on chirp linearity from varying environmental conditions. Additionally, the system has high capability for using long chirp periods typically associated with relatively large non-linearities, since the laser system ensures that non-linearity of the chirp is mitigated.

The non-linearity of the frequency chirp may be attributed to factors such as bandwidth limitations of a driver, and non-linear characteristics of the chirped laser source, among other causes.

The compensation signal may further be used to wavelength lock the chirped laser source.

Hence, the laser system may provide ultra-fast, ultra-broadband, and ultra-accurate laser wavelength locking, e.g., in an optical communication system.

The direct complex-domain OPFD according to the first aspect enables fast frequency measurement with real-time response in the laser system. Traditional WLLs are based on optical frequency analysis, where frequency is maintained during each measurement, hence such measurement speeds cannot be very fast. Naturally, for fast-shifting lasers, e.g., due to fast changing conditions, a fast-reacted WLL is advantageous.

Furthermore, there is enabled implementation of both unlimited locking range and high locking accuracy by the fast real-time tracking. However, in traditional WLLs, a tradeoff between locking range and accuracy cannot be avoided.

In relation to WLLs, calibration may be desired to convert relative frequency measurements into absolute frequency values. This calibration may be performed by a calibration module, which may provide a known reference frequency. By comparing the relative instantaneous frequency to this reference, the laser system can accurately determine the absolute frequency.

The control unit may further comprise a reference signal, wherein the control unit and the measurement unit form an Opto-Electronic Phase-Locked Loop, OEPLL, configured to stabilize a frequency and phase of the light signal.

OEPLL is a fast real-time control loop that may lock laser chirp to a reference linear signal. The reference signal may, e.g., be a reference ramp signal, which may change slower than a feedback speed (e.g., 100 times slower). An estimated error between a measured non-linear angle-time mapping and the reference ramp signal is used for further calculation such as proportional amplification, integral calculation, and sum for non-linearity compensation.

Hence, OEPLL enables a faster feedback control. OEPLL may, e.g., be used for fast changing chirped laser sources.

The control unit of the laser system may be configured to, by processing the complex signal, estimate a non-linearity of the light signal, perform pre-distortion calculations, and output the compensation signal, wherein a Digital-to-Analog Converter, DAC, is configured to convert the processed complex signal into the compensation signal.

Hence, there is enabled complex-domain phase calculation and accumulation, as compared to real-domain. The use of complex signals may enable real-time and positive/negative chirp measurements. Further, smaller time delay is enabled without sacrificing accuracy in estimation performance (e.g., at chirp edges between up- and down-ramps and vice versa).

In other words, a complex signal may be synthesized using a plurality of real (digital) signals, e.g., at least two real signals. The complex signal may for example be represented by a vector.

Based on the complex signal, the (phase) angle of the light signal may be calculated.

It is appreciated that wavelengths of the angle diversity signals may be non-linearly mapped to a driving voltage of the chirped laser source, and that mapping between voltage and time is a linear curve. Therefore, the relation between (phase) angle and time is a non-linear curve. However, a linear angle-time (i.e., angle-voltage) mapping is needed for linear frequency chirp. Hence, using the measured non-linear angle-time mapping, the non-linearity of the frequency chirp can be estimated. In an example, the non-linearity may be estimated by unwrapping the phase angle and comparing it with a linear response (i.e., by measuring a deviation of the actual output from an output predicted by a linear model).

Based on the estimated non-linearity, a pre-distorted voltage ramp can be obtained. The pre-distorted voltage ramp may, e.g., be obtained from the estimated non-linearity by least-mean-squared or linear interpolation. For example, the chirp linearization may be realized in an iterative manner to obtain a higher linear phase. For this, the calculated voltage ramp (up and down) may be stored and applied for a next iteration.

The calculated pre-distortion curve may in turn be used to update the driving voltage of the chirped laser source. In particular, the outputted processed digital signal may comprise the pre-distortion curve. Hence, via the DAC, the pre-distortion curve may be converted into the compensation signal.

In an example, the laser system may be integrated into a LIDAR system. The LIDAR system may hence comprise the laser system according to the second aspect, and a LIDAR detection unit, wherein the LIDAR detection unit may be configured to receive a reflected light signal based on the light signal.

Hence, a system for non-linearity estimation (and pre-distortion) for direct laser frequency chirp in a LIDAR system is enabled. Particularly, the LIDAR system enables adaptive frequency chirp non-linearity monitoring and control for managing the non-linearity, which non-linearity may vary in response to varying conditions such as external temperatures.

The LIDAR system may further be realized using a small size architecture that can be integrated onto a chip, such as a PIC. The optical (non-linearity) measurement unit may be integrated onto one and the same LIDAR PIC, such as compactly co-packaged with the control unit into a same LIDAR mainboard.

As discussed in relation to the first aspect, a simplification in complexity of digital signal processing is enabled, e.g., by angle-diversity detection and phase accumulation. Especially, frequency domain processing approaches may be avoided, i.e., high digital signal processing complexity-based Hilbert transform approaches may be avoided.

The chirped laser source of the laser system may comprise an optical beam splitter arranged in a path of the light signal and be configured to split the light signal into a LIDAR emission signal which may be emitted from the LIDAR system, and the portion of the light signal being provided to the optical measurement unit of the laser system. Thus, the "portion of the light signal" is the part of the light being split off from the light signal and directed to the optical measurement unit. The remainder of the light signal then forms the LIDAR emission signal which may be emitted from the LIDAR system, for example towards a target.

In other words, the LIDAR system may split the light signal from the chirped laser source into two parts: a Local Oscillator (LO) signal and a Transmission (Tx) signal. The light signal may, e.g., be split by a beam splitter. Typically, the LO signal may constitute a small portion of the light signal (e.g., 1%), while the Tx signal may comprise a majority of the light signal (e.g., 99%). The Tx signal is used to detect distance and is reflected from a target to the LIDAR detection unit.

In the detection unit, the LO signal and the reflected light signal may be coupled together for coherent detection. This process may, for example, involve the use of receiver optics for collecting the reflected light signal, a 2x2 coupler for combining the LO and reflected signal, a balanced photodetector for detecting the combined signal and converting it into an electrical signal, and/or a signal processing unit for analyzing the electrical signal, e.g., to determine a distance, velocity, and/or other characteristics of a target.

Further, the LIDAR system may comprise an optical phased array for facilitating the LIDAR system to dynamically steer the Tx signal across a field of view.

The LIDAR system may be integrated into an automotive vehicle and configured to provide real-time distance and velocity data of surroundings of the automotive vehicle.

In other words, the LIDAR system can be incorporated into a vehicle to continuously monitor and measure the distance and speed of objects around the vehicle in real-time. The LIDAR system may be implemented in devices or systems such as robotics, drones, and various industrial applications, e.g., to provide real-time distance and/or velocity data.

The real-time distance and velocity data enable the vehicle to detect and respond to obstacles and other vehicles promptly. Furthermore, when implemented in other devices such as robotics and drones, the LIDAR system enhances their ability to navigate environments and avoid obstacles.

Further, a linear frequency chirp in a LIDAR system may improve range resolution, e.g., allowing for more accurate measurement of distances to closely spaced objects. Additionally, a linear frequency chirp may enhance a signal-to-noise ratio and facilitate detection of weak reflections from distant objects.

According to third aspect of the present inventive concept there is provided a method for measuring frequency of a light signal from a chirped laser source, said method comprising:

at an optical measurement unit,

receiving at least a portion of the light signal, and
outputting, via an optical hybrid coupler, at least two angle diversity signals based on a difference between a first and second signal formed by splitting the at least portion of the light signal, wherein the second signal is delayed relative to the first signal, and wherein a pair of signals of the at least two angle diversity signals have a fixed phase shift relative to each other; and

at a control unit,

receiving the at least two angle diversity signals,
generating a complex signal, based on the at least two angle diversity signals, and
determining an instantaneous phase of the complex signal for determining an instantaneous frequency of the light signal.

This aspect may generally present the same or corresponding advantages as the former aspect.

The method may further comprise, at the optical measurement unit: splitting, at an interferometer structure, the at least portion of the light signal into the first signal and the second signal, delaying the second signal relative to the first signal; and detecting, via at least two photodiodes, the at least two angle diversity angles.

In other words, the optical measurement unit may comprise an interferometer structure for splitting the portion of the light signal.

The portion of the light signal may, e.g., be split such that 50% of the portion of the light signal is delayed relative the remaining 50%. However, other splitting ratios can also be used. In principle, the first and second signals (after the delay line) should be equal. If the delay line has high loss, more power may be allocated to the second signal with the delay line to compensate for the loss. If the power is not equally split, a Signal-to-Noise Ratio (SNR) decreases of the recombined signal. However, the method may still function effectively with an unequal split, but the performance degrades as the SNR decreases.

It should be noted that any examples or exemplary configurations or features (such as "for example" or "e.g.,") mentioned herein are intended as non-limiting examples. These examples are provided to illustrate the concepts discussed and should not, unless state otherwise, be construed as limiting the scope of the invention.

Effects and features of the first, second, and third aspects are largely analogous. Examples mentioned in relation to the first, second, and third aspects are largely compatible. It is further noted that the disclosure relates to all possible combinations of features unless explicitly stated otherwise.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1 is a schematic illustration of a system for measuring frequency of a light signal.
Fig. 2A is a schematic illustration of an optical measurement unit.
Fig. 2B shows an intensity over time graph for three angle diversity signals phase shifted with 120° to each other.
Fig. 3 is an alternative schematic illustration of an optical measurement unit.
Fig. 4 illustrates a flow diagram of a method for measuring an instantaneous frequency based on angle diversity signals.
Figs. 5A-E schematically illustrates an exemplary system and corresponding measurement graphs for simulating tracking of a fast chirped laser.
Fig. 6 schematically illustrates a laser system for determining a compensation signal for adjusting a frequency of a laser signal.

Detailed description

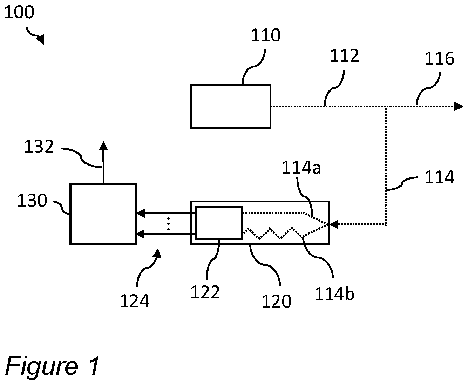

Fig. 1 illustrates a system 100 for measuring frequency of a light signal 112 from a chirped laser source 110. The system comprises an optical measurement unit 120 configured to receive at least a portion 114 of the light signal 112, and to output, via an optical hybrid coupler 122, at least two angle diversity signals 124 based on a difference between a first and second signal 114a, 114b formed by splitting the at least portion 114 of the light signal 112, wherein the second signal 114b is delayed relative to the first signal 114a, and wherein a pair of signals of the at least two angle diversity signals 124 have a fixed phase shift relative to each other.

The system 100 further comprises a control unit 130 configured to: receive the at least two angle diversity signals 124, generate a complex signal, based on the at least two angle diversity signals 124, and determine an instantaneous phase of the complex signal for determining an instantaneous frequency of the light signal 112.

Further, an output signal 132 outputs the determined instantaneous frequency, e.g., for further processing.

The system 100 hence forms a direct complex-domain OPFD, which enables reduction of delay lines and facilitates further integration to external systems.

The portion 114, of the light signal 112, received by the optical measurement unit 120 may be relatively small compared to a remaining propagating portion 116 of the light signal 112. The portion 114 may for example be a small part (e.g., about 1%) of the light signal 112. Similarly, the remaining propagating portion 116 may correspond to about 99% of the light signal 112. However, these percentages are exemplary and may vary depending on specific requirements of the laser system 100. The division of the light signal 112 into the portions may be such that a sufficient amount of light is available for both measurements and propagation to a target. The portion 114 may be separated from the light signal 112 using an optical beam splitter or a similar device, e.g., configured to direct a small fraction of the light towards the optical measurement unit 120 while allowing for a majority of the light signal to continue propagating.

The optical measurement 120 unit may be based on a Mach-Zehnder interferometer (MZI) structure, e.g., an asymmetric MZI.

An MZI structure may be an optical device configured to split light signal into two separate paths. These paths have different optical lengths and eventually recombine. By analyzing the interference pattern created when the light paths merge, the MZI can be used to detect changes in the optical path length difference.

In Fig. 1, the optical path of the second signal 114b is illustrated to be longer than the optical path of the first signal 114a (see jagged dashed line). However, the optical path of the first signal 114a may be longer than the optical path of the second signal 114b. Alternatively, the paths may comprise different materials. The different materials may affect the propagation speed of the signals 114a, 114b such that one of the first and second signal 114a, 114b is delayed relative to the other signal.

The optical paths of the first signal 114a and the second signal 114b may be provided by waveguides for guiding the first signal 114a and the second signal 114b, respectively. Thus, the optical measurement unit 120 may comprise a first waveguide for guiding the first signal 114a and a second waveguide for guiding the second signal 114b.

The optical hybrid coupler 122 is a device which may be used to combine or split optical signals. It typically consists of multiple input and output ports, allowing it to mix signals from different sources or distribute a single signal to multiple destinations. Hence, the optical hybrid coupler 122 operates based on the principle of interference, where the input optical signals are combined in such a way that their phases and amplitudes are manipulated to achieve the desired output. In Fig. 1, the input signals to the optical hybrid coupler 122 are the first and second signals 114a, 114b, and the output is the angle diversity signals 124.

Hence, light interference occurs within the optical hybrid coupler 122, such as within a multimode interference coupler. When the two light signals 114a, 114b, having traveled different optical lengths, recombine in the optical hybrid coupler 122, they interfere with each other. The interference pattern is a result of the phase difference between the two signals 114a, 114b. In an example, the optical hybrid coupler 122 may be a multi-mode interferometer (MMI). The optical hybrid coupler 122 may, for example, comprise at least one MMI.

The resulting combined light signals, i.e., the resulting angle diversity signals 124, may then be directed to photodiodes (not shown in Fig. 1). Each signal detected by the photodiodes may represent the interference outcome.

In Fig. 1, optical measurement unit 120 comprises the optical hybrid coupler 122 configured to output the at least two angle diversity signals 124 based on an interference (i.e., the difference) between the first signal 114a and the second signal 114b. However, it is appreciated that the optical hybrid coupler 122 may, e.g., be arranged separately to waveguides used for guiding the first and second signals 114a, 114b. Hence, the first and second signals 114a, 114b may be outputted from the waveguides and received by the optical hybrid coupler 122, which in turn outputs the at least two angle diversity signals 124 to the control unit 130.

The control unit 130 may be a microcontroller, e.g., a simple microcontroller. In other words, the control unit 130 may have a low complexity and/or facilitate on-chip integration.

It should be realized that the control unit 130 may be implemented as a processing unit, such as a general-purpose processing unit, e.g., a central processing unit (CPU), which may execute instructions of one or more computer programs in order to implement functionality of the control unit 130. The control unit 130 may also or alternatively be implemented as firmware arranged e.g., in an embedded system, or as a specifically designed processing unit, such as an Application-Specific Integrated Circuit (ASIC) or a Field-Programmable Gate Array (FPGA). It should be realized that the control unit 130 may be implemented as a combination of hardware and software components.

Although not shown in detail in Fig. 1, the laser system 100 may be integrated onto a single semiconductor chip. All or some of the components of the laser system 100 may be integrated onto a single chip. For example, the optical measurement unit 120 and the controller 130 may be integrated on a same chip (such as a PIC being further provided with electronic circuitry). The chirped laser source 110 may, for example, be arranged outside of the chip. However, it is appreciated that the chirped laser source 110 may further be arranged or integrated on the same chip as the optical measurement unit 120 and the controller 130.

The control unit 130 may further comprise a reference signal (not shown in Fig. 1), wherein the control unit 130 and the measurement unit 120 forms an Opto-Electronic Phase-Locked Loop, OEPLL, e.g., configured to stabilize a frequency and phase of the light signal 112.

OEPLL may be used for real-time lock of a laser frequency and/or chirp to a certain ramp signal. The determined instantaneous frequency may be compared with a reference signal, which may change slower (e.g., at a rate of 1 kHz) than a feedback speed (e.g., 100 kHz). A corresponding difference (i.e., error) based on the comparison may be used for further calculations such as proportional amplification, integral calculation, and/or sum for non-linearity compensation.

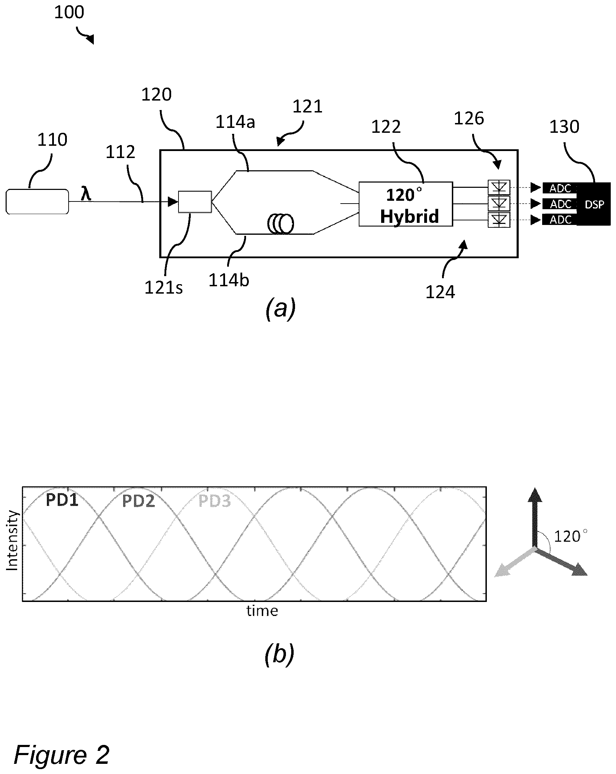

In Fig. 2a, an optical measurement unit 120 of a system 100 for measuring frequency of a light signal 112 is schematically illustrated with further details.

Here, the chirped laser source 110 emits the light signal 112 (also denoted λ) directly to optical measurement unit 120. The light signal 112 is then received by an interferometer structure 121 configured to split the light signal 112 into a first signal 114a and the second signal 114b. The light signal 112 is split into the first and second signals 114a, 114b by a splitter 121s or 1x2 coupler. The splitter 121s may, e.g., be a beam splitter. In an example, the light signal 112 received by the optical measurement unit is split 50-50, such that the first signal 114a corresponds to 50% of the and the second signal 114b corresponds to 50% of the received light signal 112.

The interferometer structure 121 further comprises optical paths configured to delay the second signal 114b relative to the first signal 114a. Here, the optical path corresponding to the second signal 114b is illustrated to form a delay line by having a looped optical path (e.g., fiber loops), i.e., a longer optical path than the optical path of the first signal 114a.

The longer optical path may, e.g., be about 10 or 20 cm longer than the shorter optical path. However, it is appreciated that the delay may be achieved through any suitable delay line or signal delay approach, e.g., by having the signals 114a, 114b propagating through materials with different refractive indices.

As an example, second signal 114b travels through a delay waveguide and recombines with a local oscillator (LO), i.e., the first signal 114a, in the optical hybrid coupler 122.

The optical hybrid coupler 122 in Fig. 2a is a 120-degree optical hybrid coupler 122. The 120-degree optical hybrid coupler 122 splits two input optical signals into three output angle diversity signals 124 with a fixed phase difference of 120 degrees between each pair of outputs (see Fig. 2b, where the three angle diversity signals 124 are denoted as PD1, PD2, and PD3, respectively).

The 120-degree hybrid coupler 122 may be based on a directional coupler or a 3x3 MMI, e.g., a 3x3 multimode interference coupler. The 3x3 MMI coupler may utilize multimode interference to split and combine input optical signals. The 3x3 MMI coupler may comprise a multimode waveguide section where multiple modes interfere constructively and destructively, resulting in the desired power distribution among output ports of the 120-degree hybrid coupler 122.

In the case of a 3x3 MMI coupler, the first and second signal 114a, 114b may be inputted into the 3x3 MMI coupler in any two of its three input ports. Hence, one input port of the 3x3 MMI coupler may be left unused or may not receive any signal. In an example, a 2x3 MMI coupler may be utilized.

In the configuration shown in Fig. 2a, the optical hybrid coupler 122 is designed to achieve a 120-degree phase shift between the output signals (i.e., angle diversity signals 124). This may be accomplished by selecting dimensions of the multimode waveguide, such as its width and length, to ensure a correct/desired interference pattern is achieved. The 120-degree hybrid coupler 122 thus provides three output angle diversity signals 124 with equal amplitude signals that are phase-shifted by 120 degrees relative to each other.

Further, in Fig. 2a, the angle diversity signals 124 are detected by three photodiodes 126. The optical measurement unit 120 comprising the 120-degree optical hybrid coupler 122 may, for example, utilize three single-ended photodiodes 126. Each photodiode 126 is positioned to detect the intensity of light from a respective output (i.e., a respective angle diversity signal 124) of the 120-degree optical hybrid coupler 122.

In a particular example, the optical measurement unit 120 comprising the 120-degree optical hybrid coupler 122 may utilize three photodiodes 126, and/or three TIAs (not shown).

In a sense, the system 100 of Fig. 2a utilizes a 120° angle diversity self-heterodyne detecting structure.

The received light signal 112, and the first and second signals 114a, 114b, can be represented by an electric field, E(t) with unit amplitude, the first signal 114a may be represented by an electric field, $E_1(t)$, and the second signal 114b may be represented by an electric field, $E_2(t)$. These signals may be represented as (wherein the second signal 114b is delayed relative to the first signal 114a):

$$E(t) = \cos[\phi(t)] \qquad (1)$$

$$E_{up}(t) = \sqrt{2}/2 \cos[\phi(t)] \qquad (2)$$

$$E_{down}(t) = \sqrt{2}/2 \cos[\phi(t-\tau)] \qquad (3)$$

where $\phi(t)$ is a phase of the light signal 112 from the chirped laser source 110 and $\tau$ is a time delay in the longer optical path.

The 120° optical hybrid coupler 122 combines $E_1(t)$ and $E_2(t)$ into equal amplitude 120° phase-shifted angle diversity signals 124. In other words, the 120-degree optical hybrid coupler 122 splits the incoming first $E_1(t)$ and second $E_2(t)$ signals 114a, 114b into three separate paths, each with a 120-degree phase difference. Each angle diversity signal 124 is in turn detected by a respective photodiode 126. In other words, the photodiodes 126 are used to form three detected angle diversity signals $I_1$, $I_2$, $I_3$ based on the respective angle diversity signal 124.

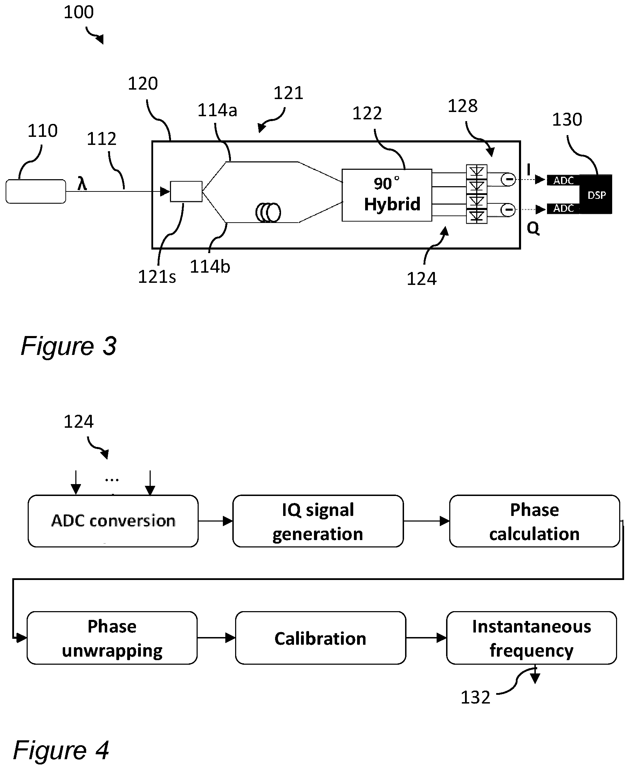

Further, in Fig. 2a, the three detected angle diversity signals 124 (i.e., three photocurrents) are sampled by analog-to-digital converters (ADCs) and analysed in a digital signal processing (DSP) domain, i.e., a control unit 130 (see further in relation to the discussion of Fig. 4).

Since a photodiode may function as low pass filters, high beat frequency components may be outside of a bandwidth of the photodiodes 126.

Considering a responsivity $R_{pd}$ of the photodiodes 126, the detected angle diversity signals 124 (i.e., photocurrents) may be represented as:

$$I_1(t) = \frac{R_{pd}}{6}\{1 + \cos[\phi(t) - \phi(t-\tau)]\} \qquad (4)$$

$$I_2(t) = \frac{R_{pd}}{6}\left\{1 + \cos\left[\phi(t) - \phi(t - \tau) - \frac{2\pi}{3}\right]\right\} \qquad (5)$$

$$I_3(t) = \frac{R_{pd}}{6}\left\{1 + \cos\left[\phi(t) - \phi(t - \tau) - \frac{4\pi}{3}\right]\right\} \qquad (6)$$

where $I_1(t)$, $I_2(t)$, $I_3(t)$ represent detected real photocurrents (i.e., real angle diversity signals 124).

Fig. 3 shows another optical measurement unit 120. To avoid undue repetition, it is appreciated that Fig. 3 illustrates a similar optical measurement unit 120 as discussed in relation to Fig. 2a. However, in Fig. 3, the optical hybrid coupler 122 is a 90-degree optical hybrid coupler 122. This type of hybrid coupler is designed to create a 90-degree phase shift between the output signals.

The 90-degree optical hybrid coupler 122, splits the input signals 114a, 114b into four output signals (i.e., four angle diversity signals 124).

The 90-degree optical hybrid coupler may use the principle of multimode interference to achieve this split. Although not shown explicitly in Fig. 3, the 90-degree hybrid coupler 122 may comprise a 2x4 MMI, a 4x4 MMI, or a directional coupler.

The four output signals from the 90-degree optical hybrid coupler 122 are then, respectively, detected by four photodiodes 124. These photodiodes 124 are arranged to form two balanced photodiodes 128. Each balanced photodiode 128 measures the difference in light intensity between two of the output angle diversity signals 124 (this differential measurement may help to cancel out common-mode noise and enhance accuracy of the detected signals).

The balanced photodiodes 128 process the four output angle diversity signals 124 to produce two detected angle diversity signals $I$, $Q$. These detected angle diversity signals $I$, $Q$ have a 90-degree phase difference between them. The transformation from four signals to two signals is achieved by the balanced photodiodes 128, which combine the intensity information from the pairs of outputted angle diversity signals to generate the detected angle diversity signals $I$, $Q$.

In a particular example, the optical measurement unit 120 comprising the 90-degree optical hybrid coupler 122 may utilize four photodiodes forming two balanced photodiodes, and/or two TIAs (not shown).

In general, the angle-diversity structure described herein may be the 120° hybrid-based 3-angle diversity structure as described in Fig. 2a, or the 90° hybrid-based 4-angle diversity architecture as described in Fig. 3. The 90° hybrid coupler creates four outputs with phase shifts of 0°, 90°, 180°, 270°. Hence, in an electrical domain, the combined term of 0° and 180° may represent the in-phase (I) component and a combination of the 90° and 270° terms may represent the quadrature (Q) component.

Fig. 4 shows a block diagram illustrating digital signal processing steps of a method for determining an instantaneous frequency of a light signal based on at least two angle diversity signals 124 (e.g., received as discussed in accordance with any of Figs. 1-3). The steps illustrated in Fig. 4 may be performed in, or by, the control unit 130. However, it is appreciated that the ADCs may be arranged within or outside of the control unit 130.

The at least two (analog) angle diversity signals 124 here undergo ADC conversion. The angle diversity signals 124 are hence received by ADCs that convert them into a digital domain, i.e., into digital signals.

The digital signals are then used to generate, or create, a complex signal $IQ(t)$ in a complex domain. The digital signals may, e.g., be represented in the complex domain by a vector.

The complex signal ($IQ$) may be is recovered by the calculation of $I + Q \cdot e^{\frac{j\pi}{2}}$. For example, based on the detected angle diversity signals represented above for the 120-degree optical hybrid coupler in equations (4)-(6), the complex signal $IQ(t)$ may be represented as:

$$IQ(t) = I_1(t) + I_2(t) \times e^{\frac{j2\pi}{3}} + I_3(t) \times e^{\frac{j4\pi}{3}} = \frac{R_{pd}}{4} e^{j[\phi(t)-\phi(t-\tau)]} \quad (7)$$

where j is the complex number.

A phase component may be extracted of the beat signal (e.g., $I_1$). As described herein, angle diversity signals (i.e., phase diversity amplitude signals) are used to calculate a phase signal of the beat signal. This in contrary to methods where the phase is extracted using Hilbert Transforms and where the beat signal is a real signal.

In other words, phase (i.e., angle) diversity detection is used to obtain phase (i.e., angle) diversity beat signals $I_1$, $I_2$, $I_3$. Two or more detections providing information of angle (phase) are provided to provide diversity of angle detection. This may be utilized for simple determination of the phase based on the detections.

The instantaneous phase ($\phi(t) - \phi(t - \tau)$) of a real signal ($\cos[\phi(t)-\phi(t-\tau)]$) can be extracted by conversion to the complex domain (*IQ* without DC) using mathematical calculations. *IQ* represents the in-phase (I) and quadrature (Q) components of the signal, and 'without DC' implies that a direct current component is removed or not considered.

In a sense, the *IQ* signal is another type of the $I_1$ signal but in a complex domain (i.e., having a same phase). By creating the *IQ* signal, the phase of $I_1$ can be easily extracted (e.g., since complex signals are easier, more real-time, and more accurate to extract phases from).

Then, the phase of the signal $I_1$ corresponds to the instantaneous frequency of the laser source. It is appreciated that the instantaneous phase ($\phi(t) - \phi(t-\tau)$) corresponds to a finite difference of the laser phase, which in turn corresponds to an estimation of instantaneous laser frequency.

Hence, a phase of the beat signal can be extracted by:

$$\phi_{beat}(t) = \phi(t) - \phi(t - \tau) = \frac{d\phi(t)}{dt} \cdot \tau \qquad (8)$$

The phase information of the beat signal extracted is the estimated instantaneous frequency. For example, when $\tau$ is small enough, $d\phi(t)/dt$ represents the instantaneous frequency of the light signal form the laser source.

Further, interference is measured with a fixed delay, denoted as $\tau$, which is small but not zero. If $\tau$ approaches zero, there would be no beat signal, as the signals would be identical with no delay. Conversely, if $\tau$ is relatively large (or too large), the phase observed may be averaged over time, which could affect the accuracy of the measurements.

Further, if $\tau$ is zero, the beat signal essentially corresponds to the direct current (DC) component. The method may hence use the phase finite difference to estimate the phase derivative, or instantaneous frequency. This necessitates that $\tau$ should not be zero. However, $\tau$ may be chosen appropriately based on the rate of change of the laser frequency. A smaller $\tau$ may enhance accuracy of the method but at the cost of reducing the signal-to-noise ratio (SNR).

For scenarios where the laser frequency changes rapidly, $\tau$ may be sufficiently small (i.e., smaller than the rate of frequency change) to accurately track these changes. Conversely, if the laser frequency changes slowly, a larger $\tau$ can be used without compromising accuracy.

To achieve this, the delay line described herein may be a small delay line, e.g., in order to record instantaneous frequency. However, this delay cannot be too small, as it would eliminate the beat signal. The length of the delay line may be adapted or optimized based on these constraints. Specifically, $\tau$ may be chosen according to the laser frequency change rate.

In some cases, it may be feasible to use a small fixed delay $\tau$ in the delay line to derive instantaneous frequency by analyzing how the angle of the complex signal varies over time. For applications such as LIDAR, where the frequency changes relatively slowly, a delay can be selected based on a fastest changing scenario. Such a delay may be adequate for slower cases while still providing a good or sufficient SNR. For example, a delay of 5 cm could be suitable for chirp speeds ranging from kHz to MHz.

In an example, beat signals of the three outputted angle diversity signals 124 of the 120-degree optical hybrid coupler based approach have 120 degrees offset. The three detected signals from the three single-ended photodiodes are converted from analog domain to the digital domain through the ADC (e.g., three ADCs). On the other hand, for the 90-degree optical hybrid coupler based approach, two beat signals with a phase offset of 90 degrees are retrieved (as presented in Fig. 3) from two balanced photodiodes.

The control unit samples the three signals $I_1$, $I_2$, $I_3$ for the 120-degree case and two signals $I_1$, $I_2$ for the 90-degree case.

Hence, for the 120-degree case, a resultant 3-dimensional vector in a complex domain may be formed by $I_1 + I_2 * e^{\frac{j2\pi}{3}} + I_3 * e^{\frac{j4\pi}{3}}$. Thus, the second angle diversity signal $I_2$ has been rotated 120 degrees ($j2\pi/3$) in the complex plane relative to the first angle diversity signal $I_1$, and the third angle diversity signal $I_3$ has been rotated a further 120 degrees ($j4\pi/3$) in the complex plane relative to the second angle diversity signal $I_2$.

Analogously, in the 90-degree case, the two detected angle diversity signals $I_1$, $I_2$ are formed into a 2-dimensional vector in the complex domain, which vector is represented by $I_1 + I_2 * e^{\frac{j\pi}{2}}$. Thus, the second angle diversity signal $I_2$ has been rotated 90 degrees ($j\pi/2$) in the complex plane relative to the first angle diversity signal $I_1$.

The instant phase of the complex signal *IQ* in the complex domain (and consequently the instant frequency of the light signal), i.e., the instant angle of the vector in the complex domain, can then be calculated as described below.

The phase may be calculated by determining the angle of the formed vector, using equation (9) for the 120-degree case, and equation (10) for the 90-degree case:

$$phase = \textbf{UNWRAP}\big(\textbf{ANGLE}(IQ)\big) \qquad\qquad (9)$$
$$= \textbf{UNWRAP}\left(\textbf{ANGLE}\left(I_1 + I_2 e^{\frac{j2\pi}{3}} + I_3 e^{\frac{j4\pi}{3}}\right)\right)$$

$$phase = \textbf{UNWRAP}\big(\textbf{ANGLE}(IQ)\big) = \textbf{UNWRAP}\left(\textbf{ANGLE}\left(I_1 + I_2 e^{\frac{j\pi}{2}}\right)\right) \quad (10)$$

In equations (9) and (10), **ANGLE** is a calculator to get the angle of a vector, and the **UNWRAP** is a calculator to unwrap radian phase angles by adding multiple $\pm 2\pi$.

Hence, a phase (angle) can be calculated. In other words, the step of phase calculation here calculates a frequency/phase (i.e., phase angle) corresponding to the at least two angle diversity signals 124 by creating a vector and calculating the angle of the vector.

Moreover, the **ANGLE** and **UNWRAP** calculators, may by way of example, be calculators with the corresponding names in *MATLAB* - a programming and numeric computing program provided by MathWorks Inc, Natick, MA, United States. However, the **ANGLE** and **UNWRAP** calculators may correspond to any suitable angle calculators or unwrapping algorithms, respectively.

The **UNWRAP** calculator specifically adds a multiple of $2\pi$ to a consecutive phase angle of the phase angle ramp on a condition that a phase difference between a phase angle (of the phase angle ramp) and the consecutive phase angle (of the phase angle ramp) is larger than or equal to $\pi$.

Adding a multiple of $2\pi$ to the consecutive phase angle of the phase angle ramp if the phase difference between a phase angle and a consecutive phase angle of the phase angle ramp is larger than or equal to $\pi$, is sometimes referred to as an "unwrap" operation. The purpose of performing the unwrap operation on the extracted phase angle ramp is to eliminate $2\pi$ or 360° jumps in the extracted phase angle ramp. In other words, the step of phase unwrapping relates to avoidance of $2\pi$ phase ambiguity.

Further, in equation (9) and (10), the signals $I_1$, $I_2$, and $I_3$ themselves are real signals. As seen in equations (9) and (10), the signals $I_1$, $I_2$, and $I_3$ are combined such as to form a vector in the complex plane. In other words, measuring of an instant frequency/phase of a resulting beat signal can be achieved by synthesizing a complex signal using a plurality of real beat signals.

Further in Fig. 4, after the phase unwrapping, a calibration is performed. The calibration may involve comparing the determined instantaneous frequency to a known standard or reference.

Hence, after calibration, the instantaneous frequency can be outputted via the output signal 132. Consequently, a real-time tracked chirp plotting over time can also be captured. For example, a phase angle ramp of the light signal can be extracted over time.

As the beat phase is extracted sample-by-sample, the laser instantaneous frequency is estimated sample-by-sample as well. Hence, fast measurements are enabled. Moreover, since the digital signal processing is working directly in a complex domain, there is no $\pm$chirp ambiguity, thus enabling accurate measurements.

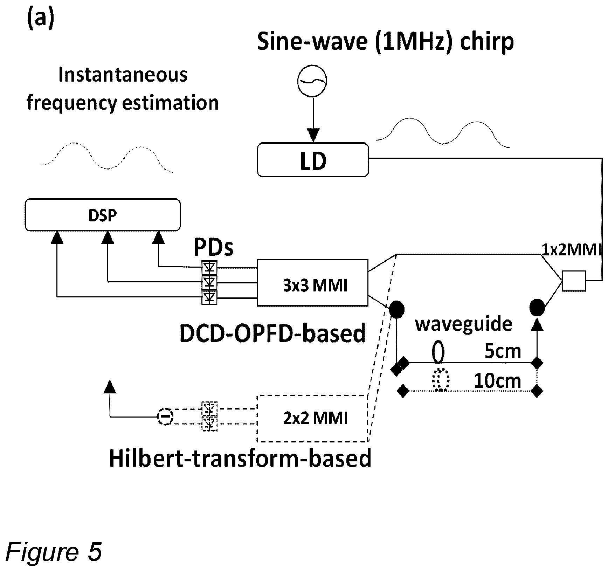

In Figs. 5A-E an exemplary simulation of tracking a fast chirped laser is investigated in a Lumerical Interconnect based on integrated photonics.

Fig. 5a schematically illustrates a simulation system. The simulation system comprises a direct modulated laser (LD) driven by a general sine-wave signal to generate a sine-shape chirp (in simulation, sine-wave driving may create a sine-wave frequency drift), which comprises rich chirp changes.

The chirped laser signal is here fed into a delayed self-heterodyne interferometer structure with two delay wave guides (with no or minimal loss) of different lengths, enabling investigation of effects of different delays. For the present simulation, a 5cm delay waveguide and a 10cm delay waveguide were used, (with no or minimal loss). A 120° hybrid coupler in angle-diversity detection is represented by an optical 3-by-3 multi-mode interferometer (3x3 MMI) followed by three photodiodes (PDs). The sampled three photocurrents are processed in a digital signal processing (DSP) domain.

For reference, in dashed lines, a Hilbert transform based system is depicted.

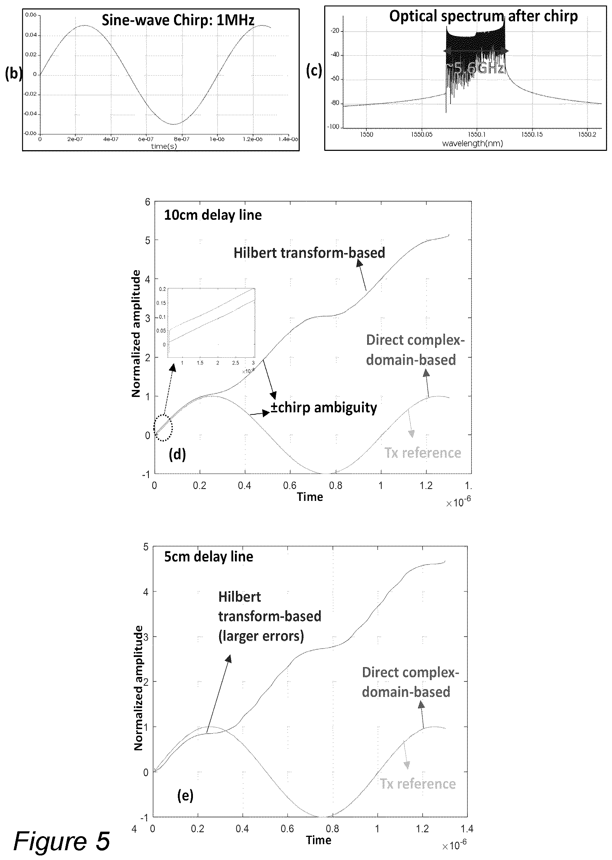

The sine-wave chirp signal is set as 1MHz as shown in Fig. 5b.

The chirp frequency range is approximately 5.6GHz as presented in Fig. 5c.

Fig. 5d and Fig. 5e describe the performance of the methods and systems described herein (e.g., in relation to Figs. 1-4) in comparison to a method/system based on Hilbert transform (sampling rate 64GSa/s). The estimated frequency chirp of these two methods is compared to the transmitted (Tx) reference signal by fitting Tx sine-wave chirp with recovered curves and normalizing to unit amplitude.

It is observed that the method based on the Hilbert transform suffers from $\pm$chirp ambiguity, and thus it cannot fully track a sine-wave chirp or a triangle-shape chirp (such as used in FMCW LIDAR). Notably, the estimating accuracy decreases when a delay waveguide is shorter, which is mainly caused by the shortened time-window of the Hilbert transform.

With a fixed chirp speed (1MHz), the beating frequency is reduced with a shorter delay, thus Hilbert transform needs longer time-window to get better spectral resolution.

However, the methods and systems described herein do not have this accuracy limitation and provides real-time tracking (as compared to frame-by-frame).

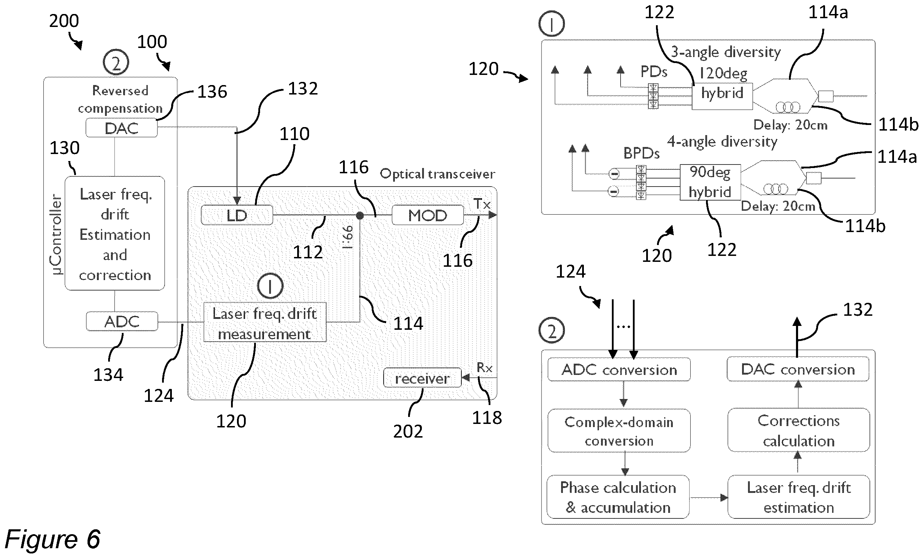

Fig. 6 illustrates a laser system 100 for generating a frequency modulated continuous wave, FMCW, light signal 112. The laser system 100 comprises a tunable laser 110 for generating the FMCW light signal 112; and an optical measurement unit 120 configured to receive a portion 114 of the FMCW light signal 112, and to output, via an optical hybrid coupler 122, at least two angle diversity signals 124 based on a difference between a first and second signal 114a, 114b formed by splitting the portion 114 of the FMCW light signal 112 wherein the second signal 114b is delayed relative to the first signal 114a, wherein a pair of signals of the at least two angle diversity signals 124 have a fixed phase shift relative to each other.

The laser system 100 further comprises a control unit 130 configured to: receive the at least two angle diversity signals 124, estimate, based on the at least two angle diversity signals 124, a compensation needed for adjusting a non-linearity of a frequency chirp of the tunable laser 110, and output a corresponding control signal 132 to the tunable laser 110.

The outputted control signal 132 is configured to improve a linearity of the frequency chirp of the FMCW light signal 112 generated by the tunable laser 110. Rapid frequency changes in a tunable laser can be triggered by fast changing environmental conditions or rapidly varying operational parameters.

The tunable laser 110 generating the FMCW light signal 112 may be a laser whose output frequency can be adjusted or varied over a range. The tunability may allow the laser to be tuned to produce an FMCW light signal 112 with linearized frequency chirp.

The portion 114 of the FMCW light signal 112, received by the optical measurement unit 120 may be relatively small compared to a remaining propagating portion 116 of the FMCW light signal 112. The portion 114 may for example be a small part (e.g., about 1%) of the FMCW light signal 112. Similarly, the remaining propagating portion 116 may correspond to about 99% of the FMCW light signal 112. However, these percentages are exemplary and may vary depending on specific requirements of the laser system 100. The division of the FMCW light signal 112 into the portions may be such that a sufficient amount of light is available for both measurements for linear chirp improvements and propagation to a target. The portion 114 may be separated from the FMCW light signal 112 using an optical beam splitter or a similar device, e.g., configured to direct a small fraction of the light towards the optical measurement unit 120 while allowing for a majority of the FMCW light signal to continue propagating.

The optical measurement 120 unit may be a non-linearity measuring module, e.g., based on an asymmetric Mach-Zehnder interferometer (AMZI) structure.

An AMZI structure may be an optical device configured to split light signal into two separate paths. These paths have different optical lengths and eventually recombine. By analyzing the interference pattern created when the light paths merge, the AMZI can detect changes in the optical path length difference.

In Block 1 of Fig. 6, the optical path of the second signal 114b is illustrated to be longer than the optical path of the first signal 114a (see looped line). However, the optical path of the first signal 114a may be longer than the optical path of the second signal 114b. Alternatively, the paths may comprise different materials. The different materials may affect the propagation speed of the signals 114a, 114b such that one of the first and second signal 114a, 114b is delayed relative to the other signal.

The optical paths of the first signal 114a and the second signal 114b may be provided by waveguides for guiding the first signal 114a and the second signal 114b, respectively. Thus, the optical measurement unit 120 may comprise a first waveguide for guiding the first signal 114a and a second waveguide for guiding the second signal 114b.

The optical hybrid coupler 122 is a device which may be used to combine or split optical signals. It typically consists of multiple input and output ports, allowing it to mix signals from different sources or distribute a single signal to multiple destinations. Hence, the optical hybrid coupler 122 operates based on the principle of interference, where the input optical signals are combined in such a way that their phases and amplitudes are manipulated to achieve the desired output. In Fig. 6, the input signals to the optical hybrid coupler 122 are the first and second signals 114a, 114b, and the output is the angle diversity signals 124.

Hence, light interference occurs within the optical hybrid coupler 122, such as within a multimode interference coupler. When the two light signals 114a, 114b, having traveled different optical lengths, recombine in the optical hybrid coupler 122, they interfere with each other. The interference pattern is a result of the phase difference between the two signals 114a, 114b. In an example, the optical hybrid coupler 122 may be a multi-mode interferometer (MMI). The optical hybrid coupler 122 may, for example, comprise at least one MMI.

The resulting combined light signals, i.e., the resulting angle diversity signals 124, may then be directed to photodiodes. Each signal detected by the photodiodes may represent the interference outcome.

In Block 1 of Fig. 6, the optical measurement unit 120 comprises the optical hybrid coupler 122 configured to output the at least two angle diversity signals 124 based on an interference (i.e., the difference) between the first signal 114a and the second signal 114b. However, it is appreciated that the optical hybrid coupler 122 may, e.g., be arranged separately to waveguides used for guiding the first and second signals 114a, 114b. Hence, the first and second signals 114a, 114b may be outputted from the waveguides and received by the optical hybrid coupler 122, which in turn outputs the at least two angle diversity signals 124 to the control unit 130.

The control unit 130 may repeatedly output a control signal 132 to the tunable laser 110. Hence, the control signal 132 may repeatedly improve the linearity of the frequency chirp. The repeatedly outputted control signal 130 may correspond to a repeatedly estimated compensation needed for adjusting the non-linearity of the frequency chirp of the tunable laser 110.

The repeat rate may be relatively low, e.g., every ten seconds. However, for unstable lasers or for lasers susceptible to changes in, e.g., chirp-scheme and/or environmental temperature, the non-linearity of the frequency chirp of the tunable laser 110 may be monitored or detected, e.g., when the non-linearity exceeds a threshold. Hence, the control signal may be configured to improve the linearity of the frequency chirp as required to optimize performance of the tunable laser.

The threshold may be defined by a figure of merit (i.e., key performance indicator, KPI, value). For example, the figure of merit (r) may be extracted from a formula such as $1 - r^2 = 12 \cdot \left( \frac{v_{nl,rms}}{f_{exc}} \right)^2$, where $v_{nl,rms}$ [Hz] is the root mean squared of a non-linear component of the (ramp up or ramp down) frequency chirp, and $f_{exc}$ [Hz] is excursion frequency of the tunable laser.

In an example, if the figure of merit exceeds 1e-5, the linearity of the frequency chirp may be deemed to not be linear enough. The threshold may indicate that the linearity of the frequency chirp is in need of adjustments or improvements.

Hence, an ultra-fast, ultra-broadband, and ultra-accurate wavelength locker (WLL) can be realized. The WLL may comprise two main parts, fast instantaneous frequency measurements, and a fast control loop.

The systems and methods described herein can be used to in real-time track laser frequency drift with high accuracy (by using the angle diversity optical delayed self-heterodyne structure). Subsequent instantaneous frequency calculation is then performed by digital signal processing. The system may in broad terms be referred to as an optical instantaneous frequency estimator.

The fast control loop may be a DSP-based control loop (e.g., a controller with ADCs/DACs, as shown in Block 2 of Fig. 6). The fast control loop can hence be used to real-time correct laser central frequency. A control loop speed can be adjusted according to the laser drift speed.

The control unit 130 may be a microcontroller, e.g., a simple microcontroller. In other words, the control unit 130 may have a low complexity and/or facilitate on-chip integration. For example, the system 100 and/or laser system 100 may be an on-chip system, enabling a compact and stable industrial product.

It should be realized that the control unit 130 may be implemented as a processing unit, such as a general-purpose processing unit, e.g., a central processing unit (CPU), which may execute instructions of one or more computer programs in order to implement functionality of the control unit 130. The control unit 130 may also or alternatively be implemented as firmware arranged e.g., in an embedded system, or as a specifically designed processing unit, such as an Application-Specific Integrated Circuit (ASIC) or a Field-Programmable Gate Array (FPGA). It should be realized that the control unit 130 may be implemented as a combination of hardware and software components.

Although not shown in detail in Fig. 6, the laser system 100 may be integrated onto a single semiconductor chip. In particular, all or some of the components of the laser system 100 may be integrated onto a single chip. For example, the optical measurement unit 120 and the controller 130 may be integrated on a same chip (such as a PIC being further provided with electronic circuitry). The tunable laser 110 may, for example, be arranged outside of the chip. However, it is appreciated that the tunable laser may further be arranged or integrated on the same chip as the optical measurement unit 120 and the controller 130.

The control unit 130 may further comprise a reference signal (not shown in Fig. 6), wherein the control unit 130 and the measurement unit 120 forms an Opto-Electronic Phase-Locked Loop, OEPLL, configured to stabilize a frequency and phase of the FMCW light signal 112.

OEPLL may be used for real-time lock of a laser frequency chirp to a certain ramp signal. The detected phase angles of the beat signal may then be compared with a reference ramp signal, which may change slower (e.g., at a rate of 1 kHz) than a feedback speed (e.g., 100 kHz). A corresponding difference (i.e., error) based on the comparison may be used for further calculations such as proportional amplification, integral calculation, and/or sum for non-linearity compensation.

As schematically illustrated in the Block 1 of Fig. 6, the optical hybrid coupler 122 of the laser system may, e.g., correspond any one of the optical hybrid couplers 122 described in relation to Figs. 2s and 3.

Further block 2 of Fig. 6 illustrates a block diagram of signal processing steps of the laser system 100.

Also, from Block 2 of Fig. 6, the laser system 100 is seen to comprise an ADC, and a DAC. The ADC may be arranged within or outside of the control unit 130, whereas the DAC may be arranged within or outside of the control unit 130.

The ADC converts analog input signals, to the control unit 130, based on the at least two angle diversity signals 124, into a digital signal.

Further, the control unit 130 converts the digital signal into a complex domain. The digital signal may be represented in the complex domain as a vector in the complex domain. Based on detected angle diversity signals S1, S2, S3, for the 120-degree optical hybrid coupler, a complex signal $IQ(t)$ may be represented as:

$$IQ(t) = S_1(t) + S_2(t) \times e^{\frac{j2\pi}{3}} + S_3(t) \times e^{\frac{j4\pi}{3}} = \frac{A_{pd}}{4} e^{j[\phi_{FMCW}(t) - \phi_{FMCW}(t-\tau)]}. \quad (11)$$

Then, a phase of the beat signal can be extracted by:

$$\phi_{beat}(t) = \phi_{FMCW}(t) - \phi_{FMCW}(t-\tau) = \frac{d\phi_{FMCW}(t)}{dt} \cdot \tau. \quad (12)$$

The three detected signals from the three single-ended photodiodes are converted from analog domain to the digital domain through the ADC (e.g., three ADCs). On the other hand, for the 90-degree optical hybrid coupler based approach, two beat signals with a phase offset of 90 degrees are retrieved from two balanced photodiodes.

The control unit 130 samples the three signals S1, S2, S3, for the 120-degree case and two signals S1, S2 for the 90-degree case.

The instant phase angle of the signal in complex plane can then be calculated as described below. This phase angle corresponds to an instant frequency of the FMCW light signal.

The phase angle may be calculated by determining the angle of the formed vector, using equation (9) for the 120-degree case, and equation (10) for the 90-degree case as described in relation to Fig. 4.

In other words, measuring of an instant frequency/phase of a resulting beat signal may be achieved by synthesizing a complex signal using a plurality of real beat signals.

It is appreciated that the wavelength of the FMCW light signal is non-linearly mapped to driving voltage (i.e., power) of the tunable laser, and that a mapping between driving voltage and time is a linear curve. Therefore, the mapping between phase angle and time (similarly angle-vs-voltage) is a non-linear curve.

On the other hand, a linear angle-vs-time (angle-vs-voltage) mapping would correspond to a linear frequency chirp. Hence, using the measured non-linear mapping, the non-linearity can be estimated.

The non-linearity is estimated, a pre-distortion calculation may be performed. The pre-distortion calculation may comprise determining a pre-distortion curve (i.e., a pre-distorted voltage ramp) based on the non-linearity estimate. The pre-distortion curve is then used to produce a control signal 132 via conversion by the DAC. In other words, the pre-distortion curve is used to update the driving voltage of the tunable laser 110 via the DAC.

The pre-distorted voltage ramp may, e.g., be calculated from the estimated phase non-linearity by least-mean-squared or linear interpolation. The frequency chirp linearization may, for example, be realized in an iterative manner. For this, the calculated voltage ramp (up and down) may be stored and applied for a subsequent iteration. This iterative approach can be also implemented in the control unit 130.

Although not shown in the figures, a reference phase angle ramp may be subtracted from the extracted phase angle ramp. Hence, a real-time lock of the frequency chirp to a certain ramp signal can be realized. In other words, an Opto-Electronic Phase-Locked Loop, OEPLL, may be provided. The OEPLL may, e.g., stabilize a frequency and phase of the FMCW light signal 112.

By the term "reference phase angle ramp" is here meant a phase angle ramp which changes much slower than a feedback speed (e.g., 100 times slower).

By subtracting the reference phase angle ramp from the extracted phase angle ramp, what remains is an estimated error. This estimated error may be used for further calculations such as (but not limited to) proportional amplification, integral calculation, and/or sum for non-linearity compensation.

The laser system 100 depicted in Fig. 6 may be a LIDAR system 200 comprising a laser system 100, and a LIDAR receiver 202. The LIDAR receiver 202 receives a reflected light signal 118 based on the FMCW light signal 112.

In particular, the LIDAR receiver 202 of the LIDAR system 200 detects a LIDAR response signal (i.e., the reflected light signal 118). The LIDAR response signal may hence be based on the propagating portion 116 of the FMCW light signal 112 (i.e., a LIDAR emission signal). The LIDAR receiver 202 may, e.g., be a photodiode such as a balanced and/or unbalanced photodiode, a photo-multiplier tube (PMT), and/or an image detector.

The LIDAR emission signal is typically split off from the propagating portion 116 of the FMCW light signal 112 prior to the LIDAR emission signal being emitted from the LIDAR system 200. A portion being split off from the propagating portion 116 may be referred to as a local oscillator signal. The LIDAR emission signal may subsequently be emitted towards a target. In case the LIDAR emission signal reaches the target, at least some of the LIDAR emission signal may be reflected back towards the LIDAR system 200. The LIDAR emission signal being reflected back (i.e., the reflected light signal 118) and the local oscillator signal may then be combined again, at the LIDAR system 200. When the two signals are combined, interference between the light signals may occur. The resulting combined signal may form a beat frequency. This beat frequency is linked to the distance between the LIDAR system 200 and the target. In the present LIDAR system 200, the combined signal may be detected by the LIDAR receiver 202, thereby detecting the reflected light signal 118 (i.e., the LIDAR response signal).

Further, in the block diagram depicting the LIDAR system 200, the LIDAR system 200 comprises a tunable laser 110 (e.g., a fast frequency-chirped laser tunable by phase or gain), an optical measurement unit 120 (e.g., for real-time chirp tracking), and a control unit (for complex domain non-linearity estimation and predistortion calculation). Herein, angle diversity signals 124 outputted by the optical measurement unit 120 are converted by an ADC before entering the control unit 130. A pre-distorted curve is then used to compensate for the inherent non-linearity in the frequency chirp via a control signal 132. The control signal 132 being outputted from the control unit 130 via a DAC 136.

In an ideal case, where the frequency chirp is linear, the range resolution of a LIDAR system 200 (based on a FMCW light signal 112) is given by equation (11):

$$\Delta D = \frac{c}{2 \cdot f_{exc}}, \qquad\qquad (13)$$

where c [m/s] is the speed of the light in the vacuum, and $f_{exc}$ is excursion frequency of the tunable laser 110.

However, when the frequency chirp is non-linear, the width of a peak of a corresponding beat spectrum is enlarged, and thus the range accuracy is deteriorated. The peak widening or broadening caused by the non-linearity of the frequency chirp can be quantified by equation (12):

$$\Delta D = D \cdot \frac{2\pi \cdot v_{nl,rms}}{f_{exc}}, \qquad\qquad (14)$$

where $D$ [m] is a distance to the target, and $v_{nl,rms}$ [Hz] is the root mean squared of a non-linear component of the (ramp up or ramp down) frequency chirp. From equation (14), it is noted that the range resolution $\Delta D$ is higher for longer target distances $D$ when the laser non-linearity $v_{nl,rms}$ is not suppressed. In other words, an effect of the chirp non-linearity is more prominent for far away targets. Thereby, a high chirp linearity is, e.g., beneficial in LIDAR systems 200 which may measure long target distances (e.g., in order of hundreds of meters).

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A system (100) for measuring frequency of a light signal (112) from a chirped laser source (110), said system (100) comprising:

   an optical measurement unit (120) configured to receive at least a portion (114) of the light signal (112), and to output, via an optical hybrid coupler (122), at least two angle diversity signals (124) based on a difference between a first and second signal (114a, 114b) formed by splitting the at least portion (114) of the light signal (112), wherein the second signal (114b) is delayed relative to the first signal (114a), and wherein a pair of signals of the at least two angle diversity signals (124) have a fixed phase shift relative to each other; and
   a control unit (130) configured to:

      receive the at least two angle diversity signals (124),
      generate a complex signal, based on the at least two angle diversity signals (124), and
      determine an instantaneous phase of the complex signal for determining an instantaneous frequency of the light signal (112).

2. The system (100) according to claim 1, wherein the optical measurement unit (120) comprises an interferometer structure configured to split the at least portion (114) of the light signal (112) into the first signal (114a) and the second signal (114b), and to delay the second signal (114b) relative to the first signal (114a).

3. The system (100) according to claim 1 or 2, wherein optical measurement unit (120) comprises at least two photodiodes for detecting the at least two angle diversity signals (124).

4. The system (100) according to any one the preceding claims, wherein the system (100) is integrated onto a single semiconductor chip, or wherein the system (100) is fiber-based.

5. The system (100) according to any one the preceding claims, wherein the optical hybrid coupler comprises at least one multiple mode interferometer, MMI.

6. The system (100) according to any one of the preceding claims, further comprising an Analog-to-Digital Converter, ADC, wherein the ADC is configured to convert an analog input signal to the control unit (130), based on the at least two angle diversity signals (124), into a digital signal.

7. The system (100) according to any one of the preceding claims,
wherein the complex signal is represented in a digital domain based on a sum of the at least two angle diversity signals (124) when each angle diversity signal (124) is assigned a matched phase term.

8. The system (100) according to any one of the preceding claims,
wherein the instantaneous phase of the complex signal is determined based on sample-by-sample calculations.

9. The system (100) according to any one of the preceding claims,
wherein the determined instantaneous phase of the complex signal is adjusted based on phase unwrapping calculations to account for instantaneous phase values exceeding $2\pi$.

10. The system (100) according to any one of the preceding claims, wherein the at least portion (114) of the light signal (112), represented by $E(t)$, is split into the first signal (114a), represented by $E_1(t)$, and the second signal (114b), represented by $E_2(t)$,

wherein the second signal (114b) is configured to travel through a delay line for delaying the second signal (114b), $E_2(t - \tau)$, with a time delay $\tau$, relative to the first signal (114a),
wherein the first and second signals with different time delays, $E_1(t)$, $E_2(t - \tau)$, are configured to be split and merged into the at least two angle diversity signals (124) via the optical hybrid coupler (122),
wherein each angle diversity signal (124) is configured to be detected by a respective photodiode,
wherein a phase of a first detected angle diversity signal, corresponds to a phase finite difference, with delay $\tau$, of the light signal (112), and
wherein the phase finite difference is used to estimate the instantaneous frequency of the light signal (112).

11. A laser system comprising a chirped laser source (110) and a system (100) according to claim 1, wherein the control unit (130) is configured to determine, based on a plurality of determined instantaneous frequencies during a chirp of the chirped laser source (110), a compensation signal (132) to improve a linearity of the light signal (112).

12. The laser system according to claim 11, wherein the control unit (130) is configured to, by processing the complex signal, estimate a non-linearity of the light signal (112), perform pre-distortion calculations, and output the compensation signal (132), wherein a Digital-to-Analog Converter, DAC, is configured to convert the processed complex signal into the compensation signal (132).

13. A method (1000) for measuring frequency of a light signal (112) from a chirped laser source (110), said method (1000) comprising:
at an optical measurement unit (120),

receiving at least a portion (114) of the light signal (112), and
outputting, via an optical hybrid coupler (122), at least two angle diversity signals (124) based on a difference between a first and second signal (114a, 114b) formed by splitting the at least portion (114) of the light signal (112), wherein the second signal (114b) is delayed relative to the first signal (114a), and wherein a pair of signals of the at least two angle diversity signals (124) have a fixed phase shift relative to each other; and at a control unit (130),

receiving the at least two angle diversity signals (124),

generating a complex signal, based on the at least two angle diversity signals (124), and

determining an instantaneous phase of the complex signal for determining an instantaneous frequency of the light signal (112).

14. The method according to claim 13, further comprising, at the optical measurement unit:

splitting, at an interferometer structure, the at least portion (114) of the light signal into the first signal (114a) and the second signal (114b),

delaying the second signal (114b) relative to the first signal (114a); and

detecting, via at least two photodiodes, the at least two angle diversity angles (124).

*Figure 1*

*(a)*

*(b)*

Figure 2

100

120

110   112   114a   121   122   128   130

λ

90°
Hybrid

ADC
DSP
ADC

I

Q

121s   114b

124

*Figure 3*

124

ADC conversion → IQ signal generation → Phase calculation

Phase unwrapping → Calibration → Instantaneous frequency

132

*Figure 4*

(a)

Instantaneous
frequency estimation

Sine-wave (1MHz) chirp

LD

DSP

PDs

3x3 MMI

1x2MMI

DCD-OPFD-based

waveguide
5cm
10cm

2x2 MMI

Hilbert-transform-based

*Figure 5*

Figure 5

Figure 6

Europäisches
Patentamt

European
Patent Office

Office européen
des brevets

## EUROPEAN SEARCH REPORT

**Application Number**

EP 24 21 8659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/287587 A1 (VOYANT PHOTONICS INC [US]) 19 January 2023 (2023-01-19) <br> * paragraph [0031] – paragraph [0033] * <br> * figures 1,2 * <br> * paragraph [0036] * <br> * paragraph [0041] * <br> * paragraph [0047] – paragraph [0049] * <br> * paragraph [0060] – paragraph [0064] * <br> ----- | 1-14 | INV. <br> G01S7/4911 <br> G01J9/00 <br> G01J9/04 <br> G01S17/34 <br> G01J3/32 |
| Y | WO 2024/202374 A1 (MITSUBISHI ELECTRIC CORP [JP]) 3 October 2024 (2024-10-03) <br> * figure 6 * <br> * paragraph [0075] * <br> * paragraph [0017] * <br> * paragraph [0082] * <br> ----- | 1-14 | |
| A | US 2024/183714 A1 (NAZARATHY MOSHE [IL] ET AL) 6 June 2024 (2024-06-06) <br> * figures 1,2 * <br> * paragraph [0115] – paragraph [0125] * <br> ----- | 1-14 | |

| | |
|---|---|
| **TECHNICAL FIELDS SEARCHED (IPC)** | |
| G01S <br> G01J | |

The present search report has been drawn up for all claims

| Place of search | Date of completion of the search | Examiner |
|---|---|---|
| Munich | 23 April 2025 | Töpfer, Nils-Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8659

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | | Publication date | Patent family member(s) | | Publication date |
|---|---|---|---|---|---|
| WO 2023287587 | A1 | 19-01-2023 | CN | 117561419 A | 13-02-2024 |
| | | | CN | 119828157 A | 15-04-2025 |
| | | | DE | 112022003542 T5 | 29-05-2024 |
| | | | US | 2023014034 A1 | 19-01-2023 |
| | | | WO | 2023287587 A1 | 19-01-2023 |
| WO 2024202374 | A1 | 03-10-2024 | EP | 4460711 A1 | 13-11-2024 |
| | | | US | 2024337735 A1 | 10-10-2024 |
| | | | WO | 2024202374 A1 | 03-10-2024 |
| US 2024183714 | A1 | 06-06-2024 | NONE | | |

EPO FORM P0459

For more details about this annex : see Official Journal of the European Patent Office, No. 12/82